(19) Europäisches Patentamt
European Patent Office
Office européen des brevets

(11) EP 1 560 362 B1

# (12) EUROPEAN PATENT SPECIFICATION

(45) Date of publication and mention of the grant of the patent:
**20.09.2006 Bulletin 2006/38**

(51) Int Cl.:
***H04L 9/32*** *(2006.01)* ***G06F 1/00*** *(2006.01)*

(21) Application number: **04462003.7**

(22) Date of filing: **30.01.2004**

## (54) Encryption method and encryption system based on the use of a reference data vector

Auf der Nutzung eines Referenzdatenvektors basierendes Verschlüsselungsverfahren und -system

Procédé et système de cryptage basé sur l'utilisation d'un vecteur de données de référence

(84) Designated Contracting States:
**AT BE BG CH CY CZ DE DK EE ES FI FR GB GR HU IE IT LI LU MC NL PT RO SE SI SK TR**

(43) Date of publication of application:
**03.08.2005 Bulletin 2005/31**

(73) Proprietor: **Hewlett-Packard Development Company, L.P.**
**Houston, TX 77070 (US)**

(72) Inventor: **Haraszti, Attila**
**1141 Budapest (HU)**

(74) Representative: **Marsh, David John et al**
**Hewlett-Packard Limited**
**Intellectual Property and**
**General Legal Section**
**Building 3, Filton Road**
**Stoke Gifford, Bristol BS34 8QZ (GB)**

(56) References cited:
**EP-A- 1 043 862**
**WO-A-98/48538**
**WO-A-02/078249**
**US-A1- 2002 070 844**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

## Field of the invention

The present invention relates to the field of cryptography.

## Background and prior art

In traditional cryptography, the sender and receiver of a message know and use the same secret key: the sender uses the secret key to encrypt the message, and the receiver uses the same secret key to decrypt the message. This method is known as secret-key or symmetric cryptography.

The main challenge is getting the sender and receiver to agree on the secret key without anyone else finding out. If they are in separate physical locations, they must trust a courier, a phone system, or some other transmission medium to prevent the disclosure of the secret key. Anyone who overhears or intercepts the key in transit can later read, modify, and forge all messages encrypted or authenticated using that key. The generation, transmission and storage of keys is called key management; all cryptosystems must deal with key management issues. Because all keys in a secret-key cryptosystem must remain secret, secret-key cryptography often has difficulty providing secure key management, especially in open systems with a large number of users.

Data Encryption Standard (DES) is a widely used method of data encryption using a private (secret) key. For each given message, the key is chosen at random from a very large number of possible keys. Like other private key cryptographic methods, both the sender and the receiver must know and use the same private key.

DES applies a 56-bit key to each 64-bit block of data. The process can run in several modes and involves 16 rounds or operations. Although this is considered "strong" encryption, many companies use "triple DES", which applies three keys in succession. DES is specified in the ANSI X3.92 and X3.106 standards and in the Federal FIPS 46 and 81 standards.

In order to solve the key management problem, Whitfield Diffie and Martin Hellman introduced the concept of public-key cryptography in 1976. Public-key cryptosystems have two primary uses, encryption and digital signatures. In their system, each person gets a pair of keys, one called the public key and the other called the private key. The public key is published, while the private key is kept secret.

The need for the sender and receiver to share secret information is eliminated; all communications involve only public keys, and no private key is ever transmitted or shared. In this system, it is no longer necessary to trust the security of some means of communications. The only requirement is that public keys be associated with their users in a trusted (authenticated) manner (for instance, in a trusted directory). Anyone can send a confidential message by just using public information, but the message can only be decrypted with a private key, which is in the sole possession of the intended recipient. Furthermore, public-key cryptography can be used not only for privacy (encryption), but also for authentication (digital signatures) and various other techniques.

In a public-key cryptosystem, the private key is always linked mathematically to the public key. Therefore, it is always possible to attack a public-key system by deriving the private key from the public key. Typically, the defence against this is to make the problem of deriving the private key from the public key as difficult as possible. For instance, some public-key cryptosystems are designed such that deriving the private key from the public key requires the attacker to factor a large number, in this case it is computationally infeasible to perform the derivation. This is the idea behind the RSA public-key cryptosystem.

WO 02 / 078 249 A1 shows a method of using biometric information for secret generation. A feature vector is extracted from the captured biometric data. The feature vector is then transformed into a code word, and the code word is used to construct the secrets. A one-way hash of the secret is stored. Only if a user generates a new secret that has the same hash value as that stored will the user be confirmed.

EP 1 043 862 A2 shows a repeatable cryptographic key that is generated based on varying parameters that represent physical measurements.

The invention facilitates provision of an improved solution for the key management problem.

## Summary of the invention

In one aspect the invention provides a method of encrypting binary data. A reference data vector is acquired using a reference object. For encoding of each bit of the binary data a random vector is determined on the basis of the reference data vector.

This encryption method is particularly advantageous as the key management problem is avoided. In contrast to the prior art encryption is not performed on the basis of an exact key but on the basis of a reference object from which a reference data vector is acquired.

In accordance with a preferred embodiment of the invention the reference object is a physical object. In this case some kind of measurement is performed on the physical object in order to acquire the reference data vector that is the basis for determining the random vectors for encoding of the data.

In accordance with a preferred embodiment of the invention a biometric object is used as a reference object, such as a user's fingerprint, iris, voice, or face. Biometric features are extracted from the biometric reference object in order to acquire the reference data vector.

In accordance with a further preferred embodiment of the invention an image is used as a reference object. For example, a photograph of a passport or chip card can be used as such an image. The image is scanned and filtered in order to obtain the reference data vector. Preferably the filtering involves some kind of averaging in order to increase the robustness of the method.

In accordance with a further preferred embodiment of the invention a data object is used as a reference object. For acquisition of the reference data vector the data object is rendered by means of a rendering program, such as a text processing program where the data object is a text document, and the data acquisition is performed on the rendered data object.

In accordance with a further preferred embodiment of the invention the random vector for encoding one of the bits is determined by generating a candidate random vector and by calculating the scalar product of the candidate random vector and the reference data vector. In case the absolute value of the scalar product is (i) above a pre-defined threshold value and (ii) the sign of the scalar product corresponds to the bit to be encoded, the candidate random vector is accepted for encoding of the bit and stored. In case the candidate random vector does not fulfil these two requirements (i) and (ii) another candidate random vector is generated and the conditions are tested again. This procedure continues until a candidate random vector is identified that fulfils both conditions.

In accordance with a further preferred embodiment of the invention a running index of the accepted candidate random vector is stored rather than the complete candidate random vector. The combination of the running index and the seed value of the pseudo random number generator that is used for generating of the random vectors unequivocally identifies the complete random vector. This way the size of the result of the encryption can be reduced drastically.

In accordance with a further preferred embodiment of the invention a data file is encrypted. For example a user can encrypt a data file on his or her computer on the basis of one of his or her biometric features in order to protect the data file against unauthorised access.

In accordance with a further preferred embodiment of the invention a user's personal data, such as the user's name as printed on his or her passport or chip card, is encrypted. This is useful for checking the authenticity of the passport or chip card.

In accordance with a further preferred embodiment of the invention a symmetric key is encrypted on the basis of the reference object. For example, the symmetric key is used for encryption of a large data file. The symmetric key itself is encrypted in accordance with a method of the present invention on the basis of a reference object. This way the symmetric key is protected in a secure way while avoiding the disadvantages of prior art key management approaches.

In another aspect the present invention provides a method of decrypting binary data. The binary data comprises a random vector for each encoded bit. The decoding is performed by acquiring a reference data vector from a reference object. The decryption of one of the bits is performed on the basis of one of the random vectors and the reference data vector.

In accordance with a preferred embodiment of the invention the decryption of one of the bits is performed by determining the sign of the scalar product of the reference data vector and the one of the random vectors.

Decryption of the encrypted binary data is only possible if the reference object is authentic. Depending on the implementation, decrypting requires the encryptor's biometric data, the image that was used as a reference object for the encryption, e.g. the user's passport, or rending of a data object that was used for acquisition of the reference data for the encryption. It is to be noted that the reference data vector that was used for the encryption does not need to be reproduced in an exact way for the decryption; some degree of error in the acquisition of the reference data vector is allowed without negatively affecting the decryption.

The present invention is particularly advantageous in that it facilitates solution of the prior art key management problem in a user friendly, convenient and yet secure way. The present invention can be used in various fields for the purposes of protecting the confidentiality of data and for the purpose of authentication of documents or files.

## Brief description of the drawings

In the following, preferred embodiments of the invention will be described, by way of example only, and with reference to the drawings, in which:

Figure 1 is a flow chart showing a method for encrypting of binary data,

Figure 2 illustrates the result of the encoding method of figure 1,

Figure 3 is a flow chart showing a method for decrypting data that is encrypted in accordance with the encryption method shown in figure 1,

Figure 4 is a block diagram of a computer system for encrypting, transmitting and decrypting data,

Figure 5 is a flow chart showing a method for encrypting of data by means of a pseudo random number generator,

Figure 6 is a flow chart illustrating the decryption method corresponding to the encryption method of figure 5,

Figure 7 is a block diagram of a computer system that implements the encryption and decryption methods of figures 5 and 6,

Figure 8 is illustrative of a grid that is used for filtering an image,

Figure 9 is illustrative of the result of the filtering operation,

Figure 10 is a flow chart showing a method for producing a passport with encrypted data,

Figure 11 is a flow chart showing a method for authentication of the passport,

Figure 12 is a flow chart showing a method for digitally signing a document,

Figure 13 is a flow chart showing a method for checking the authenticity of the digitally signed document,

Figure 14 is a block diagram of a computer system that implements the methods of figures 12 and 13.

**Detailed description**

Figure 1 shows a flow chart for encryption of l bits of binary data $B_1$ $B_2$, $B_3$, ... $B_j$, .... $B_l$. A reference object is used as a basis of the encryption. As a matter of principle any physical or data object that has a certain uniqueness can be used as such a reference object. For example, an image, such as a photo printed or attached to a document, can be used as a reference object. Alternatively a rendered data file is used as a reference object, such as a text file that is rendered by a text processing program. As a further alternative a portion of a person's body is used as a reference object for extraction of biometric features, or a user's utterance, such as the user's voice.

Depending on the kind of reference object a data acquisition step is performed (step 100). This way the reference data vector $\vec{\xi}$ is obtained (step 102) that has a number k of values obtained from the reference data object.

Preferably there is some kind of filtering of the raw data acquired from the reference object in order to provide the reference data vector $\vec{\xi}$. For example, the raw data is filtered by a low pass filter for increased robustness of the encoding and decoding method.

Further, it is useful to normalize the data vector $\vec{\xi}$. This way all values $\xi_i$ are within a defined range, such as between [-1; 1].

In step 104 the l bits to be encrypted are entered. In step 106 the index j is initialised. In step 108 a first candidate random vector $\vec{R}$ is generated by means of a random number generator. The random vector $\vec{R}$ has the same size k as the reference data vector $\vec{\xi}$.

In step 110 the scalar product of the reference data vector and the candidate random vector is calculated. If the absolute value of this scalar product is above a predefined threshold level ε a first condition is fulfilled. If the sign of the scalar product matches the bit $B_j$ to be encoded this means that the candidate random vector can be accepted for encoding of bit $B_j$.

For example, if the bit $B_j$ is '0' the sign of the scalar product needs to be '-' and if $B_j$ = 1 then the sign of the scalar product needs to be '+'.

In other words the candidate random vector $\vec{R}$ is accepted for encrypting bit $B_j$ if both of the following conditions are met:

(i)

$$\varepsilon \leq \left| \sum_{i=1}^{k} \xi_i \cdot R_i \right|$$

and

(ii)

$$B_j = sign\left( \sum_{i=1}^{k} \xi_i \cdot R_i \right)$$

If one of the conditions (i) and (ii) is not fulfilled the control goes back to step 108 for generation of a new candidate random vector which is then tested against the two conditions (i) and (ii) in step 110. Steps 108 and 110 are carried out repeatedly until a candidate random vector has been found that fulfils both of the conditions of step 110. The accepted candidate random vector constitutes row j of matrix M (step 112). In step 114 index j is implemented and the control goes back to step 108 for encoding of the next bit $B_j$ of the l bits to be encrypted.

After encryption of all l bits the control goes to step 116 where the matrix M is outputted as a result of the encryption.

It is to be noted that the choice of threshold ε is a trade off between security and processing time. The security of the encoding is proportional to the value of the threshold ε. However, increasing ε also increases the average number of attempts for finding an acceptable candidate random vector. A convenient choice for ε is 1, 2, 3, 4, 5, or 6, preferably between 3 and 4, most probably ε = 3.7.

Figure 2 shows the resulting matrix M that has a number l of rows and k of columns. Each row j of matrix M is assigned to one of the bits $B_j$ and contains the random vector that encodes the respective bit $B_j$ .

Decryption of matrix M in order to recover the encrypted bits is only possible if the decryptor is in the possession of the reference object that was used for the encryption (cf. step 100 of fig. 1) as the reference data vector $\vec{\xi}$ is not stored in the matrix M or elsewhere.

Figure 3 illustrates a corresponding decryption method. In step 300 the matrix M is entered. In step 302 data is acquired from the reference object. On this basis the reference data vector $\vec{\xi}'$ is obtained (step 304). It is to be noted that the data acquisition step 100 of figure 1 and data acquisition step 302 of figure 3 are substantially identical. However, in case the reference object is a physical object the data acquisition will involve some kind of measurement error.

As a consequence the raw data obtained from the measurements of the reference object will not be exactly the same in step 100 of figure 1 and step 302 of figure 3. As a consequence reference data vector $\vec{\xi}'$ provided in step 304 will also not be identical to reference data vector $\vec{\xi}$ provided in step 102 in figure 1. Despite such differences between the reference data vector ξ that was used for the encoding and the reference data vector $\vec{\xi}'$ that forms the basis of the decoding, a correct decoding of the matrix M can be performed in order to obtain the 'hidden' bits $B_1$ ... $B_j$ .

In step 306 the index j is initialised. In step 308 the scalar product of the reference data vector $\vec{\xi}'$ and the random vector in row j of matrix M that is assigned to bit $B_j$ is calculated. The sign of the scalar provides the decoded bit value $B_j$ whereby the same convention as for the encoding is used. In other words, when the sign is negative, the bit value is '0'; if the sign is positive the bit value $B_j$ is '1'.

In step 310 the index j is implemented and the control goes back to step 308 for decoding of the next bit position. Steps 308 and 310 are carried out repeatedly until all l bit positions have been decoded. The decoded l bits are outputted in step 312.

It is to be noted that the encryption and decryption methods of figures 1 and 3 are particularly advantageous as they are error tolerant in view of unavoidable measurement errors in the data acquisition from the reference object. Typically the reference data vectors used for the encryption and for the decryption will not be exactly the same but still a correct decryption result is obtained with a high degree of reliability and security.

Figure 4 shows a block diagram of a corresponding computer system. The computer system has computer 400 that is used for encryption and computer 402 that is used for decryption. Computer 400 has processor 404 for running program 406. Program 406 has program modules 408, 410, 412 and 414. Program module 408 implements a random number generator. Program module 410 serves for encryption of a file by means of a symmetric key, such as by DES encryption. Program module 412 serves for encryption of the symmetric key in accordance with the method of figure 1. Program module 414 serves for image processing of image data provided by scanner 416 that is coupled to computer 400.

Computer 400 has storage 418 for storage of file 420, encrypted file 422, symmetric key 424 and matrix 426 that results from the encoding of symmetric key 424.

Computer 402 has processor 428 for running of program 430. Program 430 has program modules 432, 434, 414.

Computer 402 has storage 438. Storage 438 serves for storage of the encrypted file 422 received via network 440 from computer 400. Further, storage 438 serves for storage of the decrypted file 420, matrix 426 received via network 440 from computer 400 and the decrypted symmetric key 424.

Scanner 442, that is similar to scanner 416, is coupled to computer 402.

In operation, computer 400 is used for encryption of file 420. File 420 is encrypted by means of program module 410 using symmetric key 424. The resulting encrypted file 422 is stored in storage 418. For encryption of symmetric key 424 the user scans a reference object, such as his or hers passport, by means of scanner 416.

The resulting raw image data is processed by program module 414. For example program module 414 performs some kind of low pass filtering and normalization of the raw image data obtained from scanner 416. The filtered image data is provided to program module 412 that performs the encryption of symmetric key 424 in accordance with the method of figure 1 using program module 408 as a source for the candidate random vectors. The resulting matrix M 426 is stored in storage 418.

For decryption of encrypted file 422 computer 402 receives data object 446 containing encrypted file 422 and matrix 426. In order to initiate the decryption the user has to scan in the reference object, e.g. his or hers passport. This will result in similar raw image data as obtained in the original scan for the encryption. The raw image data are processed in the same way as for the encryption by program module 414 of program 430.

The filtered image data is provided to program module 434 that performs the decryption of matrix M 426 in accordance with the method of figure 3. The result of the decryption performed by program module 434 is symmetric key 424 that is stored in storage 438. By means of symmetric key 424 program module 432 decrypts encrypted file 422 which provides the original file 420.

It is to be noted that the computer system of figure 4 does not require a key management system for the symmetric key 424. Rather a convenient reference object, such as the user's passport or other unique document, is used as a basis for the protection of the symmetric key 424.

Figure 5 shows a preferred embodiment of the encryption method of figure 1 that enables to compress the result of the encryption operation. Steps 500 and 502 are identical to steps 100 and 102 of figure 1. In step 503 a seed value for the pseudo random number generator is entered. In step 504 a symmetric key having a length l is entered. This corresponds to step 104 of figure 1. In addition to the initialisation of index j in step 506 (corresponds to step 106 of figure 1) index m is initialised in step 507. Index m is the running index of the random number generator.

In step 508 the first random vector $\vec{R}_{m=1}$ of k random numbers $R_i$ is generated by the pseudo random number generator on the basis of the seed value. This candidate random vector is evaluated in step 510 in the same way as in step 110 of figure 1. In case the candidate random vector $\vec{R}_{m=1}$ is accepted as it fulfils the conditions of step 510 only the running index m is stored in step 512 as an element of the sequence S that results from the encryption.

Step 514 corresponds to step 114. In step 516 the sequence S containing a number of l running indices is outputted rather than a matrix M having a number of l x k random numbers. Hence, by storing the running indices and the seed value rather than the random vectors themselves a drastic compression of the result of the encoding operation is obtained.

Figure 6 shows the corresponding decoding method that is similar to the decoding method of figure 3. In step 600 the sequence S is inputted. The seed value that was used for the encoding (cf. step 503 of figure 5) is inputted in step 601. Steps 602, 604, 606 are substantially identical to the corresponding steps 302, 304 and 306 of figure 3.

In step 607 a pseudo random generator that operates in accordance with the same algorithm as the pseudo random number generator that has been used for the encryption is used to recover the random vector $\vec{R}_{m=s_j}$ based on the seed value entered in step 601. This way the random vector that is represented by the running index $s_j$ in the sequence S is recovered.

The following step 608 is identical to step 308 of figure 3. In step 610 the index j is incremented. From there the control returns to step 607 for recovery of the consecutive random vector having the running index $s_j$. In step 612 the result of the decoding is outputted.

Figure 7 shows a computer system that implements the methods of figures 5 and 6. Elements of figure 7, that correspond to elements of figure 4 are designated by like reference numerals.

Program module 708 of program 706 implements a pseudo random number generator that produces a sequence of pseudo random numbers depending on an initial seed value. The seed value 719 is stored in storage 718. Computer 702 has user interface 748 for entering of seed value 719.

Program module 712 of program 706 implements the method of figure 5 whereas program module 734 of program 730 implements the decryption method of figure 6.

Operation of computer 700 for encryption of file 720 and symmetric key 724 is similar to operation of computer 400 of figure 4 except that seed value 719 is used as a basis for generation of pseudo random numbers by program module 708. The running indices of the accepted candidate random vectors are stored rather than the complete random vectors themselves which provides sequence S 726.

The encrypted file 722 and the sequence S 726 are transmitted as data object 746 from computer 700 to computer 702. The seed value can be memorised by the user and entered via user interface 748 into computer 702. Alternatively the seed value is transmitted from computer 700 to computer 702 as part of data object 746 for increased user convenience.

Operation of computer 702 is similar to operation of computer 402 of figure 4. Program 730 has program module 708 for generation of the pseudo random vectors as identified by sequence S 726 on the basis of see value 719. Program module 734 uses the recovered random vectors for performing the decryption of symmetric key 724.

Figures 8 and 9 are illustrative of an example for data acquisition and a low pass filtering operation for the purpose of generating a reference data vector (cf. steps 100 and 110 of figure 1, steps 303 and 304 of figure 3, steps 500 and 502 of figure 5, and steps 602 and 604 of figure 6). Figure 8 shows grid 800 that has grid elements 802. Grid 800 is used for filtering of an image. For each of the grid elements 802 a normalised average grey value is calculated. The normalised and averaged grey values provide the reference data vectors $\vec{\xi}$ for encryption) and $\vec{\xi}'$ for decryption.

Figure 9 shows original image 900 that is used as a reference object. By scanning of image 900 image data is obtained and low pass filtered by means of grid 800. The result of the filter operation is illustrated as image 902.

Figure 10 illustrates an application example of the method of figure 5 for the purpose of producing a secure passport. For the purpose of data acquisition the passport photography is scanned in step 1000. On this basis the reference data vector is obtained in step 1002 (cf. corresponding steps 500 and 502 of figure 5). In step 1003 the passport number is entered as a seed value for the pseudo random number generator.

In step 1004 the name of the person for which the passport is produced is entered. The ASCI coded name is the information to be encrypted (cf. corresponding steps 503 and 504 of figure 5). The following steps 1006 to 1014 are substantially identical to the corresponding steps 506 to 514 of figure 5.

The resulting sequence S is digitally signed in step 1016 by the private key of the organisation that issues the passport. The digitally signed sequence S is printed on the passport in step 1018. This can be done by means of a bar code or otherwise. For example a digital circuit can be printed on the passport by means of a conductive polymer in order to store the digitally signed sequence S on the passport.

Figure 11 shows a method for authenticating the passport that has been produced in accordance with the method of figure 10. This authentication method is an application of the decryption method of figure 6.

In step 1100 the digitally signed sequence S is read from the passport. By means of the public key of the issuer of the passport the digital signature is checked.

In step 1001 the passport number is entered as a seed value for the pseudo random number generator. In step 1002 the passport photography is scanned in order to obtain the reference data vector $\vec{\xi}'$ (step 1104). The following steps 1106 to 1112 are identical to corresponding steps 606 to 612 of figure 6 whereby the ASCI and coded name is outputted in step 1112 as a result of the decoding operation. In step 1114 the name that is outputted in step 1112 is compared with the name that is printed on the passport. If the names match the passport is authentic (step 1116), otherwise the passport is not accepted and access may be refused (Step 1118). - - -

Figure 12 illustrates another application example of the encoding method of figure 5. The method of figure 12 addresses a security problem of electronic commerce.

When a legal document is digitally signed by an authorised user the user relies on the correctness of the rendered display of the legal document. However the display may be filtered or manipulated otherwise such that it does not correspond to a normal rendering of the legal document.

For example the fonts of the computer have been manipulated to show digit '1' instead of digit '6'. In this case the user risks to digitally sign e.g. a payment order in the amount of €6,000,000 when his intention is only to authorise payment of €1,000,000. In order to prevent such manipulations the rendered data object, e.g. a text file (step 1200), is captured in step 1201.

This can be done by means of a screen print operation that provides a copy of the content of the actual frame buffer. The image data that is obtained this way is filtered in order to provide the reference data vector (step 1202). The page number of the actual page is used as a seed value for the pseudo random number generator (step 1203). In step 1204 the user's name is entered. The ASCI coded user name is the information to be encrypted.

The following steps 1206 to 1214 are identical to the corresponding steps 506 to 514 of figure 5.

In step 1216 the resulting sequence S is digitally signed with the private key of the user. The digitally signed sequence S is added to the data object. In case the data object is a text file, such as a Word document, this can be done by adding the digitally signed sequence S to the footer or header of the file. Each page of the data object can be processed this way.

Figure 13 shows the corresponding authentication method that is an application of the method of figure 6.

In step 1300 the digitally signed sequence S is read from the rendered data object. The digital signature is checked by means of the public key of the authorised user. In step 1301 the page number of the actual page is read and used as a seed value for the pseudo random number generator.

In step 1302 the actual page is captured by means of a screen print-type operation in order to provide image data. On the basis of the image data the reference data vector is obtained (step 1304). The following steps 1306 to 1318 are analogous to steps 1106 to 1118 of figure 11. If the user name that is obtained as a result of the decryption is correct the digital document is considered authentic (step 1116).

Figure 14 shows a corresponding computer system that implements the methods of figures 12 and 13.

Elements of the computer system of figure 14 that correspond to elements of the computer system of figure 7 are designated by like reference numerals.

Program 1406 has program module 1410 for digitally signing file 1420 by means of private key 1421 of an authorised user. Program module 1412 implements the method of figure 12 for encrypting the user's name 1424.

In operation file 1420 is rendered by text processing program module 1415, such as Microsoft Word. The actual page that is rendered by program module 1415 is captured by program module 1414 for image processing. The result of the image processing is a reference data vector that is provided to program module 1412 for encryption of user name 1424 in accordance with the method of figure 12. The result of the encryption, i.e. the sequence S, is digitally signed by means of program module 1410 using the user's private key 1421. The digitally signed sequence S is added to the file 1420.

For instance the page number of the page that is rendered by text processing program module 1415 is identified by image processing program module 1414 and stored as page number 1419 in storage 1418. This page number is used as a seed value for the pseudo random number generator implemented by program module 1408.

By means of user interface 1450 the authorised user can perform the corresponding user interactions. For example, the user may send file 1420 with the digitally signed sequence S to computer 1402 via network 1440. File 1420 is rendered by program module 1415. Further, the digitally signed sequence S and the page number 1419 are extracted from file 1420. Image processing program module 1414 uses the rendered file 1420 in order to provide the reference data vector $\vec{\xi}'$ .

The digital signature of sequence S is checked by means of program module 1432. If it is correct the sequence S is decrypted by means of program module 1434 on the basis of the reference data vector using page number 1419 as a seed value for the pseudo random number generator implemented by program module 1408. As a result the name of the user is displayed on user interface 1448. If the displayed user name corresponds to the user of public key 1452 the rendered document is authentic.

List of Reference Numerals

| | |
|---|---|
| 400 | Computer |
| 402 | Computer |
| 404 | Processor |
| 406 | Program |
| 408 | Program Module |
| 410 | Program Module |
| 412 | Program Module |
| 414 | Program Module |
| 416 | Scanner |
| 418 | Storage |
| 420 | File |
| 422 | Encrypted File |
| 424 | Symmetric Key |
| 426 | Matrix |
| 428 | Processor |
| 430 | Program |
| 432 | Program Module |
| 434 | Program Module |
| 438 | Storage |
| 440 | Network |
| 442 | Scanner |
| 446 | Data Object |
| 700 | Computer |
| 702 | Computer |
| 704 | Processor |
| 706 | Program |
| 708 | Program Module |
| 710 | Program Module |
| 712 | Program Module |
| 714 | Program Module |
| 716 | Scanner |
| 718 | Storage |
| 719 | Seed Value |
| 720 | File |
| 722 | Encrypted File |
| 724 | Symmetric Key |
| 726 | Sequence S |
| 728 | Processor |
| 730 | Program |
| 732 | Program Module |
| 734 | Program Module |
| 738 | Storage |
| 740 | Network |
| 742 | Scanner |
| 746 | Data Object |
| 748 | User Interface |
| 800 | Grid |
| 802 | Grid Elements |
| 900 | Image |
| 902 | Image |
| 1400 | Computer |
| 1402 | Computer |
| 1404 | Processor |
| 1406 | Program |
| 1408 | Program Module |
| 1410 | Program Module |
| 1412 | Program Module |
| 1414 | Program Module |
| 1415 | Program Module |
| 1418 | Storage |
| 1419 | Page Number |
| 1420 | File |
| 1421 | Private Key |
| 1424 | User Name |
| 1428 | Processor |
| 1430 | Program |
| 1432 | Program Module |
| 1434 | Program Module |
| 1438 | Storage |
| 1440 | Network |
| 1446 | Data Object |
| 1448 | User Interface |
| 1450 | User Interface |
| 1452 | Public Key |

**Claims**

**1.** A method of encrypting binary data having a number of bits, the method comprising:

- acquiring a reference data vector from a reference object (900),
- assigning a random vector for each one of the bits on the basis of the reference data vector,

**characterized in that** the assignment of the random vector comprises:

a) generating a candidate random vector,
b) calculating the scalar product of the candidate random vector and the reference data vector,
c) if the absolute value of the scalar product is above a threshold value and the sign of the scalar product corresponds to the bit to be encrypted, storing the candidate random vector for encrypting the bit,

otherwise repeating steps a) to c).

**2.** The method of claim 1, the reference object being a physical object.

**3.** The method of claim 1 or 2, the reference object being a body portion.

**4.** The method of claim 1, 2 or 3, the reference object being an utterance of a user.

**5.** The method of any one of the preceding claims, wherein the acquisition of the reference data involves the acquisition of biometric data.

**6.** The method of claim 5, further comprising filtering of the biometric data in order to obtain the reference data.

**7.** The method of claim 6, wherein biometric features are extracted from the biometric data by means of the filtering and wherein the biometric features determine the reference data vector.

**8.** The method of any one of the preceding claims, wherein an image (900) is used as the reference object.

**9.** The method of claim 8, further comprising scanning the image in order to obtain image data and filtering of the image data to provide the reference data (902).

**10.** The method of claim 9, the filtering of the image data comprising a calculation of mean values of sub-sets of the image data.

**11.** The method of claim 10, the sub-sets of the image data being determined using a predefined grid.

**12.** The method of claim 1, wherein a pseudo random number generator (408; 708; 1408) is used for generating the candidate random vectors and wherein storage of the candidate random vector is performed by storage of its running index, and further comprising storing of a seed value (719; 1419) of the pseudo random number generator.

**13.** The method of any one of the preceding claims, wherein the binary data is representative of a data file.

**14.** The method of any one of the preceding claims, wherein the binary data is representative of a user's personal data.

**15.** The method of any one of the preceding claims, wherein the binary data is representative of a symmetric key.

**16.** A computer program comprising computer program code means adapted to perform the steps of the method of any one of the preceding claims 1 to 15 when said program is run on a computer.

**17.** An electronic system for encrypting binary data comprising:

- means (416; 716) for acquiring a reference data vector from a reference object (900),
- means for assigning (404, 406; 704, 706; 1404, 1406) a random vector for each bit of a number of bits to be encoded on the basis of the reference data vector,

**characterized in that** the means for assigning comprises processing means for

a) generating a candidate random vector,
b) calculating the scalar product of the candidate random vector and the reference data vector,
c) if the absolute value of the scalar product is above a threshold value and the sign of the scalar product corresponds to the bit to be encrypted, storing the candidate random vector for encrypting the bit,

otherwise repeating steps a) to c).

**18.** The electronic system of claim 17, the means for acquiring the reference data vector comprising a biometric data acquisition apparatus.

**19.** The electronic system of claim 17 or 18, the means for acquiring the reference data comprising an image data acquisition apparatus.

**20.** The electronic system of claim 17, 18 or 19, further comprising means for rendering a data object, the means for acquiring the reference data vector being adapted to use the rendered data object as a reference object.

**21.** The electronic system of claim 20, further comprising a pseudo random number generator (408; 708; 1408) for generating the candidate random vectors, wherein the processing means is adapted to perform the storage of the candidate random vectors by storage of the corresponding running indices and a seed value of the pseudo random number generator.

**22.** A method of decrypting binary data, the binary data comprising a set of random vectors, the method comprising:

- acquiring a reference data vector from a reference object (900),

and being **characterized by**, for each random vector,

- decrypting one of the bits of the binary data on the basis of one of the random vectors and the reference data vector, wherein the decryption of the one of the bits is performed by determining the sign of the scalar product of the one of the random vectors and the reference data vector.

**23.** The method of claim 22, the random vectors being pseudo random, each random vector being represented by a running index, and further comprising entering a seed value for a pseudo random number generator in order to generate the random vectors on the basis of the seed value.

**24.** A computer program comprising computer program code means adapted to perform the steps of the method of any one of claims 22 or 23 when said program is run on a computer.

**25.** An electronic system for decrypting binary data, the binary data being encrypted by a set of random vectors, the electronic system comprising:

- means for acquiring a reference data vector using a reference object,

and being **characterized by**

- means for decrypting one of the bits of the binary data on the basis of the reference data vector and one of the random vectors of the set of random vectors, the means for decrypting being adapted for decryption of the one of the bits by determining the sign of the scalar product of the one of the random vectors and the reference data vector.

**26.** The electronic system of claim 25, each one of the random vectors being represented by a running index, and further comprising a random number generator for generating the random vectors on the basis of a seed value.

**27.** The electronic system of claim 25 or 26, further comprising processing means for determining a sign of the scalar product of the one of the random vectors and the reference data vector.

**Patentansprüche**

**1.** Ein Verfahren zum Verschlüsseln von Binärdaten, die eine Anzahl von Bits aufweisen, wobei das Verfahren folgende Schritte aufweist:

- Erfassen eines Referenzdatenvektors von einem Referenzobjekt (900),
- Zuweisen eines Zufallsvektors für jedes der Bits auf der Basis des Referenzdatenvektors,

**dadurch gekennzeichnet, dass** die Zuweisung des Zufallsvektors folgende Schritte aufweist:

(a) Erzeugen eines Kandidatenzufallsvektors,
(b) Berechnen des Skalarprodukts des Kandidatenzufallsvektors und des Referenzdatenvektors,
(c) falls der Absolutwert des Skalarprodukts über einem Schwellenwert liegt und das Vorzeichen des Skalarprodukts dem zu verschlüsselnden Bit entspricht, Speichern des Kandidatenzufallsvektors zum Verschlüsseln des Bits,

ansonsten Wiederholen der Schritte a) bis c).

**2.** Das Verfahren gemäß Anspruch 1, wobei das Referenzobjekt ein physisches Objekt ist.

**3.** Das Verfahren gemäß Anspruch 1 oder 2, wobei das Referenzobjekt ein Körperteil ist.

**4.** Das Verfahren gemäß Anspruch 1, 2 oder 3, wobei das Referenzobjekt eine Äußerung eines Benutzers ist.

**5.** Das Verfahren gemäß einem der vorhergehenden Ansprüche, bei dem die Erfassung der Referenzdaten die Erfassung von biometrischen Daten umfasst.

**6.** Das Verfahren gemäß Anspruch 5, das ferner ein Filtern der biometrischen Daten aufweist, um die Referenzdaten zu erhalten.

**7.** Das Verfahren gemäß Anspruch 6, bei dem biometrische Merkmale mittels des Filterns aus den biometrischen Daten extrahiert werden, und wobei die biometrischen Merkmale den Referenzdatenvektor bestimmen.

**8.** Das Verfahren gemäß einem der vorhergehenden Ansprüche, bei dem ein Bild (900) als das Referenzobjekt verwendet wird.

**9.** Das Verfahren gemäß Anspruch 8, das ferner ein Abtasten des Bildes, um Bilddaten zu erhalten, und ein Filtern der Bilddaten, um die Referenzdaten (902) zu liefern, aufweist.

**10.** Das Verfahren gemäß Anspruch 9, wobei das Filtern der Bilddaten eine Berechnung von Mittelwerten von Teilsätzen der Bilddaten aufweist.

**11.** Das Verfahren gemäß Anspruch 10, wobei die Teilsätze der Bilddaten unter Verwendung eines vordefinierten Gitters bestimmt werden.

**12.** Das Verfahren gemäß Anspruch 1, bei dem ein Pseudozufallszahlengenerator (408; 708; 1408) zum Erzeugen der Kandidatenzufallsvektoren verwendet wird, und wobei eine Speicherung des Kandidatenzufallsvektors durch eine Speicherung seines laufenden Index durchgeführt wird, und das ferner ein Speichern eines Startwerts (719; 1419) des Pseudozufallszahlengenerators aufweist.

**13.** Das Verfahren gemäß einem der vorhergehenden Ansprüche, bei dem die Binärdaten eine Datendatei darstellen.

**14.** Das Verfahren gemäß einem der vorhergehenden Ansprüche, bei dem die Binärdaten persönliche Daten eines Benutzers darstellen.

**15.** Das Verfahren gemäß einem der vorhergehenden Ansprüche, bei dem die Binärdaten einen symmetrischen Schlüssel darstellen.

**16.** Ein Computerprogramm, das eine Computerprogrammcodeeinrichtung aufweist, die angepasst ist, um die Schritte des Verfahrens gemäß einem der vorhergehenden Ansprüche 1 bis 15 durchzuführen, wenn das Programm auf einem Computer ausgeführt wird.

**17.** Ein elektronisches System zum Verschlüsseln von Binärdaten, das folgende Merkmale aufweist:

- eine Einrichtung (416; 716) zum Erfassen eines Referenzdatenvektors von einem Referenzobjekt (900),
- eine Einrichtung zum Zuweisen (404, 406; 704, 706; 1404, 1406) eines Zufallsvektors für jedes Bit einer Anzahl von zu codierenden Bits auf der Basis des Referenzdatenvektors,

**dadurch gekennzeichnet, dass** die Einrichtung zum Zuweisen eine Verarbeitungseinrichtung für folgende Schritte aufweist:

(a) Erzeugen eines Kandidatenzufallsvektors,
(b) Berechnen des Skalarprodukts des Kandidatenzufallsvektors und des Referenzdatenvektors,
(c) falls der Absolutwert des Skalarprodukts über einem Schwellenwert liegt und das Vorzeichen des Skalarprodukts dem zu verschlüsselnden Bit entspricht, Speichern des Kandidatenzufallsvektors zum Verschlüsseln des Bits,

ansonsten Wiederholen der Schritte a) bis c).

**18.** Das elektronische System gemäß Anspruch 17, wobei die Einrichtung zum Erfassen des Referenzdatenvektors eine Erfassungsvorrichtung für biometrische Daten aufweist.

**19.** Das elektronische System gemäß Anspruch 17 oder 18, wobei die Einrichtung zum Erfassen der Referenzdaten eine Bilddatenerfassungsvorrichtung aufweist.

**20.** Das elektronische System gemäß Anspruch 17, 18 oder 19, das ferner eine Einrichtung zum Aufbereiten eines Datenobjekts aufweist, wobei die Einrichtung zum Erfassen des Referenzdatenvektors angepasst ist, um das aufbereitete Datenobjekt als ein Referenzobjekt zu verwenden.

**21.** Das elektronische System gemäß Anspruch 20, das ferner einen Pseudozufallszahlengenerator (408; 708; 1408) zum Erzeugen der Kandidatenzufallsvektoren aufweist, wobei die Verarbeitungseinrichtung angepasst ist, um die Speicherung der Kandidatenzufallsvektoren durch eine Speicherung der entsprechenden laufenden Indizes und eines Startwerts des Pseudozufallszahlengenerators durchzuführen.

**22.** Ein Verfahren zum Entschlüsseln von Binärdaten, wobei die Binärdaten einen Satz von Zufallsvektoren aufweisen, wobei das Verfahren folgende Schritte aufweist:

- Erfassen eines Referenzdatenvektors von einem Referenzobjekt (900),

und **gekennzeichnet durch**, für jeden Zufallsvektor,

- Entschlüsseln eines der Bits der Binärdaten auf der Basis eines der Zufallsvektoren und des Referenzdatenvektors, wobei die Entschlüsselung des einen der Bits **durch** ein Bestimmen des Vorzeichens des Skalarprodukts des einen der Zufallsvektoren und des Referenzdatenvektors durchgeführt wird.

**23.** Das Verfahren gemäß Anspruch 22, wobei die Zufallsvektoren pseudozufällig sind, wobei jeder Zufallsvektor durch einen laufenden Index dargestellt wird, und das ferner ein Eingeben eines Startwerts für einen Pseudozufallszahlengenerator aufweist, um die Zufallsvektoren auf der Basis des Startwerts zu erzeugen.

**24.** Ein Computerprogramm, das eine Computerprogrammcodeeinrichtung aufweist, die angepasst ist, um die Schritte des Verfahrens gemäß einem der Ansprüche 22 oder 23 durchzuführen, wenn das Programm auf einem Computer ausgeführt wird.

**25.** Ein elektronisches System zum Entschlüsseln von Binärdaten, wobei die Binärdaten durch einen Satz von Zufallsvektoren verschlüsselt sind, wobei das elektronische System folgende Merkmale aufweist:

- eine Einrichtung zum Erfassen eines Referenzdatenvektors unter Verwendung eines Referenzobjekts,

und **gekennzeichnet durch**

- eine Einrichtung zum Entschlüsseln eines der Bits der Binärdaten auf der Basis des Referenzdatenvektors und eines der Zufallsvektoren des Satzes von Zufallsvektoren, wobei die Einrichtung zum Entschlüsseln zur Entschlüsselung des einen der Bits **durch** ein Bestimmen des Vorzeichens des Skalarprodukts des einen der Zufallsvektoren und des Referenzdatenvektors angepasst ist.

**26.** Das elektronische System gemäß Anspruch 25, wobei jeder der Zufallsvektoren durch einen laufenden Index dargestellt ist, und das ferner einen Zufallszahlengenerator zum Erzeugen der Zufallsvektoren auf der Basis eines Startwerts aufweist.

**27.** Das elektronische System gemäß Anspruch 25 oder 26, das ferner eine Verarbeitungseinrichtung zum Bestimmen eines Vorzeichens des Skalarprodukts des einen der Zufallsvektoren und des Referenzdatenvektors aufweist.

**Revendications**

**1.** Procédé de chiffrage de données binaires incluant un certain nombre de bits, le procédé comprenant les étapes consistant à:

- acquérir un vecteur de données de référence à partir d'un objet de référence (900),
- assigner un vecteur aléatoire à chacun des bits sur la base du vecteur de données de référence,

**caractérisé en ce que** l'assignation du vecteur aléatoire comprend les étapes consistant à:

a) générer un vecteur aléatoire candidat,
b) calculer le produit scalaire du vecteur aléatoire candidat par le vecteur de données de référence,
c) si la valeur absolue du produit scalaire est supérieure à une valeur de seuil et si le signe du produit scalaire correspond au bit à chiffrer, stocker le vecteur aléatoire candidat pour chiffrer le bit,

dans le cas contraire, répéter les étapes a) à c).

**2.** Procédé selon la revendication 1, dans lequel l'objet de référence est un objet physique.

**3.** Procédé selon la revendication 1 ou 2, dans lequel l'objet de référence est une partie d'un Corps.

**4.** Procédé selon la revendication 1, 2 ou 3, dans lequel l'objet de référence est une émission sonore d'un utilisateur.

**5.** Procédé selon l'une quelconque des revendications précédentes, dans lequel l'acquisition des données de référence implique l'acquisition de données biométriques.

**6.** Procédé selon la revendication 5, qui comprend en outre une étape de filtrage des données biométriques afin d'obtenir les données de référence.

**7.** Procédé selon la revendication 6, dans lequel des particularités biométriques sont extraites des données biométriques au moyen d'un filtrage, et dans lequel les particularités biométriques déterminent le vecteur de données de référence.

**8.** Procédé selon l'une quelconque des revendications précédentes, dans lequel une image (900) est utilisée comme objet de référence.

**9.** Procédé selon la revendication 8, qui comprend en outre une étape d'analyse de l'image afin d'obtenir des données d'image, et une étape de filtrage des données d'image pour fournir les données de référence (902).

**10.** Procédé selon la revendication 9, dans lequel le filtrage des données d'image comprend un calcul de valeurs moyennes de sous-ensembles des données d'image.

**11.** Procédé selon la revendication 10, dans lequel les sous-ensembles des données d'image sont déterminés en utilisant une grille prédéfinie.

**12.** Procédé selon la revendication 1, dans lequel un générateur (408; 708; 1408) de nombres pseudo-aléatoires est utilisé pour générer les vecteurs aléatoires candidats et dans lequel le stockage du vecteur aléatoire candidat est exécuté par stockage de son index courant, et qui comprend en outre un stockage d'une valeur de départ, ou germe, (719; 1419) du générateur de nombres pseudo-aléatoires.

**13.** Procédé selon l'une quelconque des revendications précédentes, dans lequel les données binaires sont représentatives d'un fichier de données.

**14.** Procédé selon l'une quelconque des revendications précédentes, dans lequel les données binaires sont représentatives des données personnelles d'un utilisateur.

**15.** Procédé selon l'une quelconque des revendications précédentes, dans lequel les données binaires sont représentatives d'une clé symétrique.

**16.** Programme informatique comprenant un moyen de code de programme informatique apte à exécuter les étapes du procédé selon l'une quelconque des revendications précédentes, lorsque ledit programme est mis en oeuvre sur un ordinateur.

**17.** Système électronique de chiffrage de données binaires comprenant:

- un moyen (416; 716) d'acquisition d'un vecteur de données de référence à partir d'un objet de référence (900),
- un moyen (404, 406; 704, 706; 1404, 1406) d'assignation d'un vecteur aléatoire à chacun des bits d'un certain nombre de bits à chiffrer sur la base du vecteur de données de référence,

**caractérisé en ce que** le moyen d'assignation comprend un moyen de traitement pour:

a) générer un vecteur aléatoire candidat,
b) calculer le produit scalaire du vecteur aléatoire candidat par le vecteur de données de référence,
c) si la valeur absolue du produit scalaire est supérieure à une valeur de seuil et si le signe du produit scalaire correspond au bit à chiffrer, stocker le vecteur aléatoire candidat pour chiffrer le bit,

dans le cas contraire, répéter les étapes a) à c).

**18.** Système électronique selon la revendication 17, dans lequel le moyen d'acquisition du vecteur de données de référence comprend un appareil d'acquisition de données biométriques.

**19.** Système électronique selon l'une des revendications 17 ou 18, dans lequel le moyen d'acquisition des données de référence comprend un appareil d'acquisition de données d'image.

**20.** Système électronique selon l'une quelconque des revendications 17, 18 ou 19, qui comprend en outre un moyen de restitution d'un objet de données, le moyen d'acquisition du vecteur de données de référence étant apte à utiliser l'objet restitué de données comme objet de référence.

**21.** Système électronique selon la revendication 20, qui comprend en outre un générateur (408; 708; 1408) de nombres pseudo-aléatoires pour générer les vecteurs aléatoires candidats, dans lequel le moyen de traitement est apte à exécuter le stockage des vecteurs aléatoires candidats en stockant les indices courants correspondants et une valeur de départ du générateur de nombres pseudo-aléatoires.

**22.** Procédé de déchiffrage de données binaires, les données binaires comprenant un ensemble de vecteurs aléatoires, le procédé comprenant les étapes consistant à:

- acquérir un vecteur de données de référence à partir d'un objet de référence (900),

et étant **caractérisé par** l'étape consistant, pour chaque vecteur aléatoire, à

- déchiffrer l'un des bits de données binaires sur la base de l'un des vecteurs aléatoires et du vecteur de données de référence, dans lequel le déchiffrage de ce bit est exécuté en déterminant le signe du produit scalaire de ce vecteur aléatoire par le vecteur de données de référence.

**23.** Procédé selon la revendication 22, dans lequel les vecteurs aléatoires sont pseudo-aléatoires, chaque vecteur aléatoire est représenté par un index courant, et qui comprend en outre l'entrée d'une valeur de départ pour un générateur de nombres pseudo-aléatoires, afin de générer les vecteurs aléatoires sur la base de la valeur de départ.

**24.** Programme informatique comprenant un moyen de code de programme informatique apte à exécuter les étapes du procédé selon l'une quelconque des revendications 22 ou 23 lorsque ledit programme est mis en oeuvre sur un ordinateur.

**25.** Système électronique de déchiffrage de données binaires, les données binaires étant chiffrées par un ensemble de vecteurs aléatoires, le système électronique comprenant

- un moyen d'acquisition d'un vecteur de données de référence utilisant un objet de référence

et étant **caractérisé par**

- un moyen de déchiffrage de l'un des bits de données binaires sur la base du vecteur de données de référence et de l'un des vecteurs aléatoires de l'ensemble des vecteurs aléatoires, dans lequel le moyen de déchiffrage est apte à déchiffrer ce bit en déterminant le signe du produit scalaire de ce vecteur aléatoire par le vecteur de données de référence.

**26.** Système électronique selon la revendication 25, dans lequel chacun des vecteurs aléatoires est représenté par un index courant, et qui comprend en outre un générateur de nombres aléatoires pour générer les vecteurs aléatoires sur la base d'une valeur de départ.

**27.** Système électronique selon la revendication 25 ou 26, qui comprend en outre un moyen de traitement pour déterminer un signe du produit scalaire de ce vecteur aléatoire par le vecteur de données de référence.

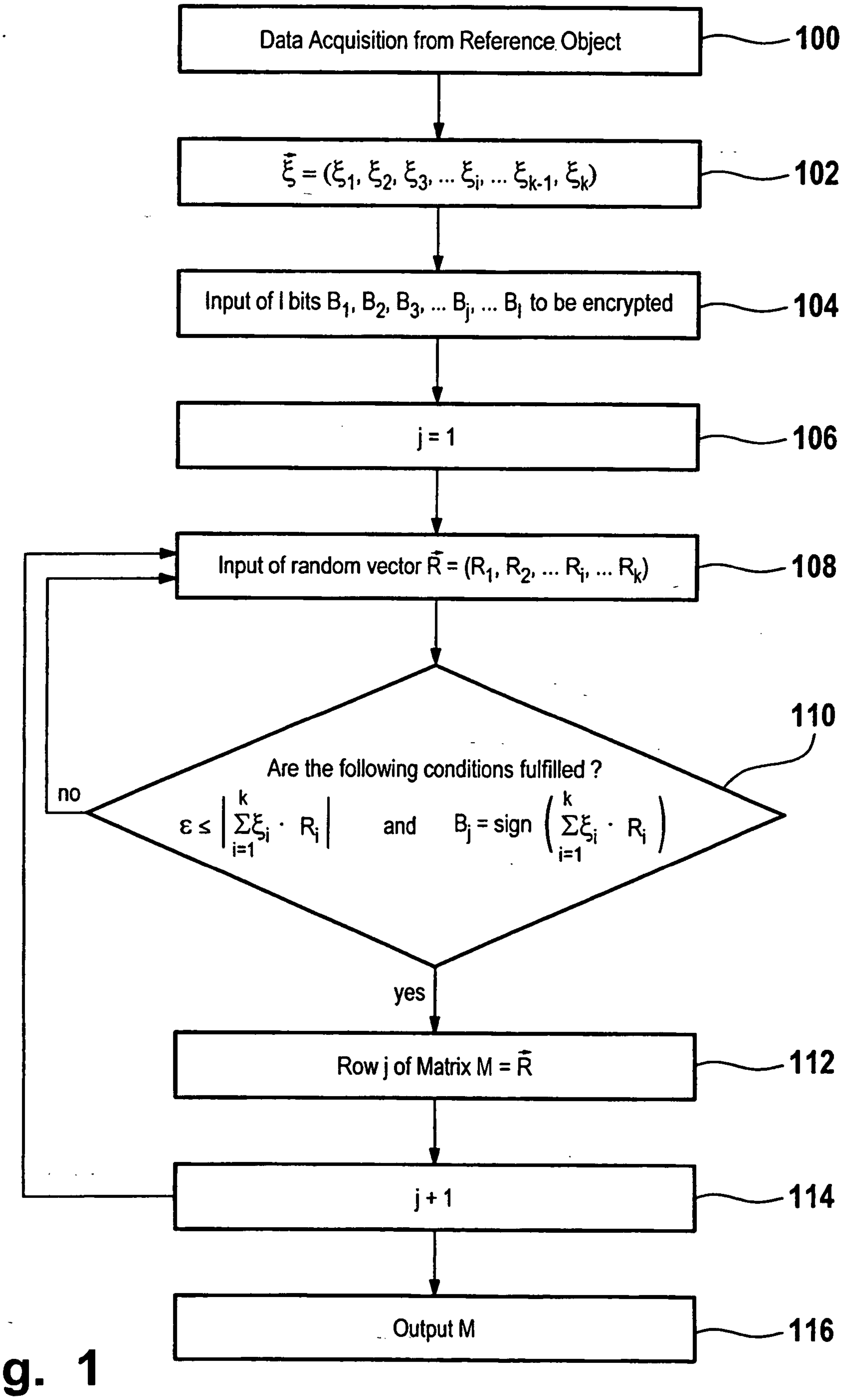
Data Acquisition from Reference Object
100
$\vec{\xi} = (\xi_1, \xi_2, \xi_3, \dots \xi_i, \dots \xi_{k-1}, \xi_k)$
102
Input of l bits $B_1, B_2, B_3, \dots B_j, \dots B_l$ to be encrypted
104
j = 1
106
Input of random vector $\vec{R} = (R_1, R_2, \dots R_i, \dots R_k)$
108
Are the following conditions fulfilled ?
$\varepsilon \le \left|\sum_{i=1}^{k} \xi_i \cdot R_i\right|$ and $B_j = \text{sign}\left(\sum_{i=1}^{k} \xi_i \cdot R_i\right)$
110
no
yes
Row j of Matrix M = $\vec{R}$
112
j + 1
114
Output M
116

Fig. 1

$$M = \begin{vmatrix} R_1^1 & R_2^1 & \cdots & R_{k-1}^1 & R_k^1 \\ R_1^2 & R_2^2 & \cdots & R_{k-1}^2 & R_k^2 \\ \vdots & & & & \\ R_1^j & R_2^j & \cdots & R_{k-1}^j & R_k^j \\ \vdots & & & & \\ R_1^{l-1} & R_2^{l-1} & \cdots & R_{k-1}^{l-1} & R_k^{l-1} \\ R_1^l & R_2^l & \cdots & R_{k-1}^l & R_k^l \end{vmatrix}$$

**Fig. 2**

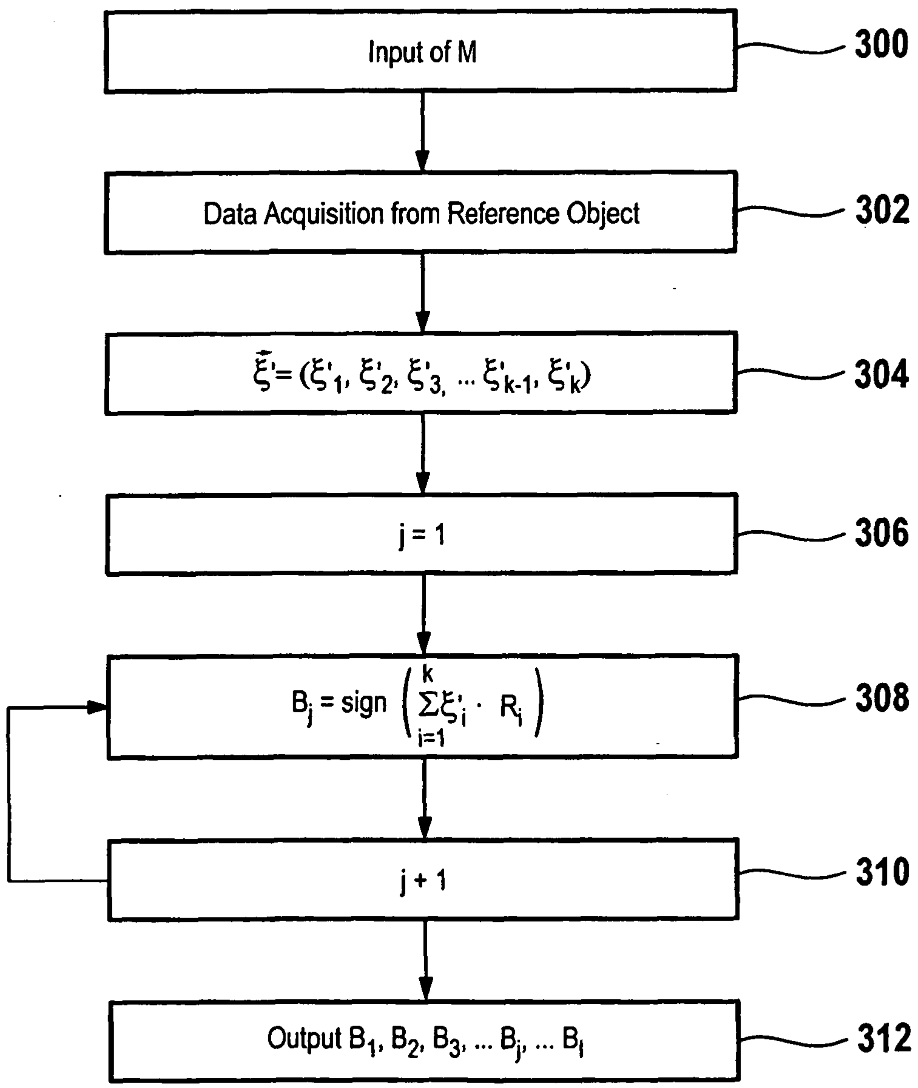


**Fig. 3**

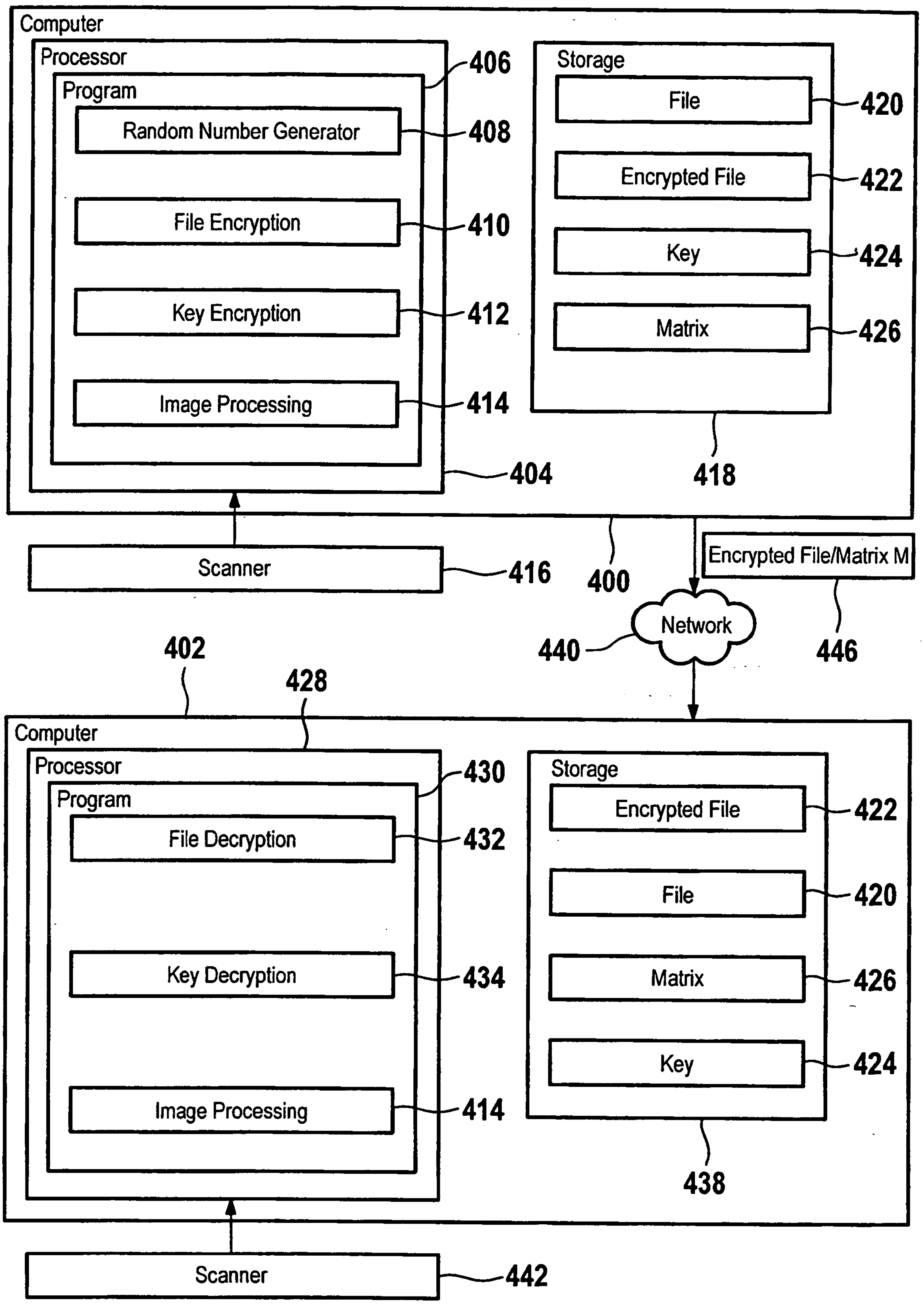
Computer
Processor
Program
Random Number Generator
File Encryption
Key Encryption
Image Processing
406
408
410
412
414
404
Storage
File
Encrypted File
Key
Matrix
420
422
424
426
418
Scanner
416
400
Encrypted File/Matrix M
Network
440
446
402
428
Computer
Processor
Program
File Decryption
Key Decryption
Image Processing
430
432
434
414
Storage
Encrypted File
File
Matrix
Key
422
420
426
424
438
Scanner
442

Fig. 4

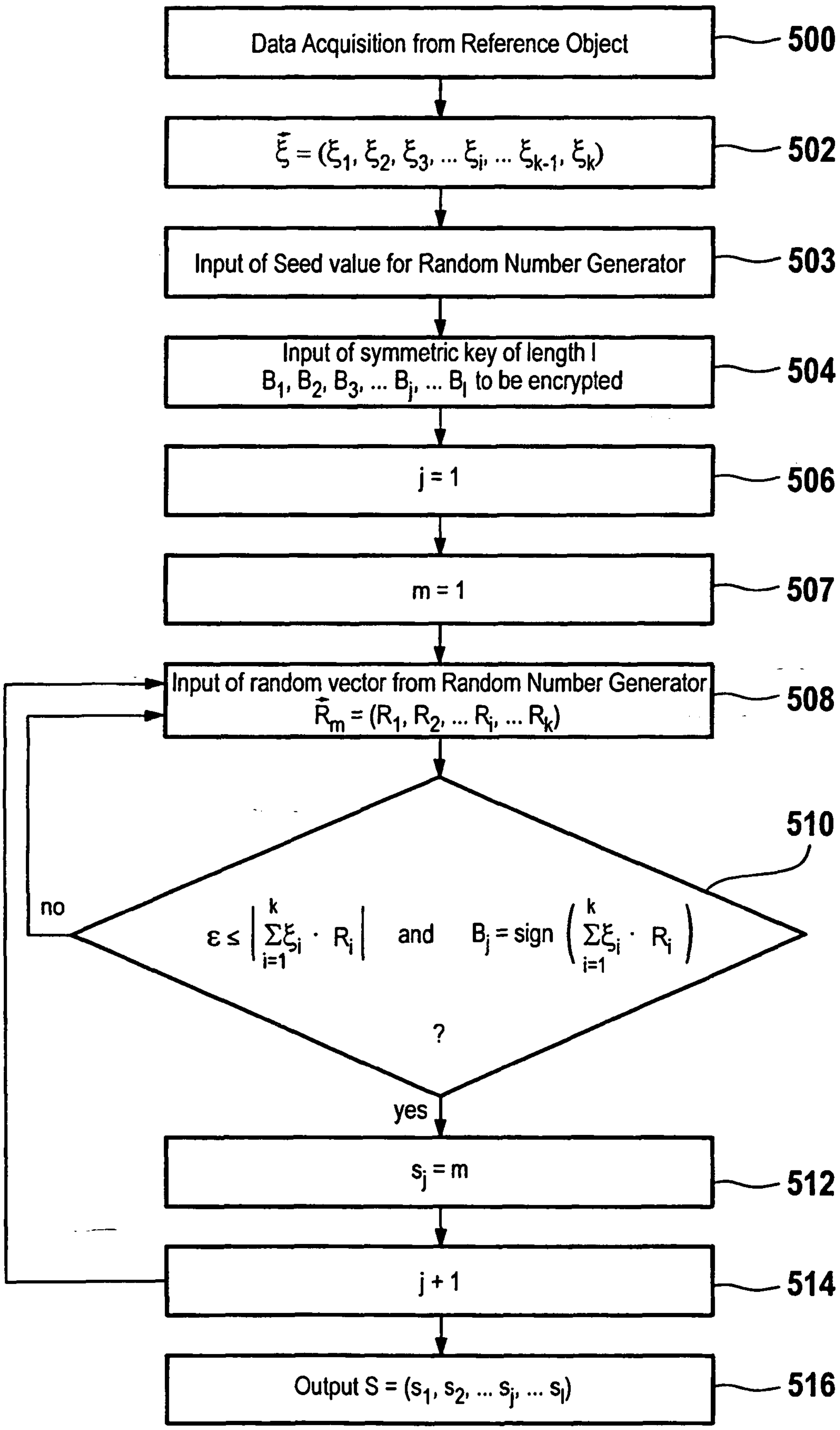

Data Acquisition from Reference Object
500
$\vec{\xi} = (\xi_1, \xi_2, \xi_3, \dots \xi_i, \dots \xi_{k-1}, \xi_k)$
502
Input of Seed value for Random Number Generator
503
Input of symmetric key of length l
$B_1, B_2, B_3, \dots B_j, \dots B_l$ to be encrypted
504
j = 1
506
m = 1
507
Input of random vector from Random Number Generator
$\vec{R}_m = (R_1, R_2, \dots R_i, \dots R_k)$
508
$\varepsilon \leq \left| \sum_{i=1}^{k} \xi_i \cdot R_i \right|$ and $B_j = \text{sign}\left( \sum_{i=1}^{k} \xi_i \cdot R_i \right)$
?
510
no
yes
$s_j = m$
512
j + 1
514
Output $S = (s_1, s_2, \dots s_j, \dots s_l)$
516


Fig. 5

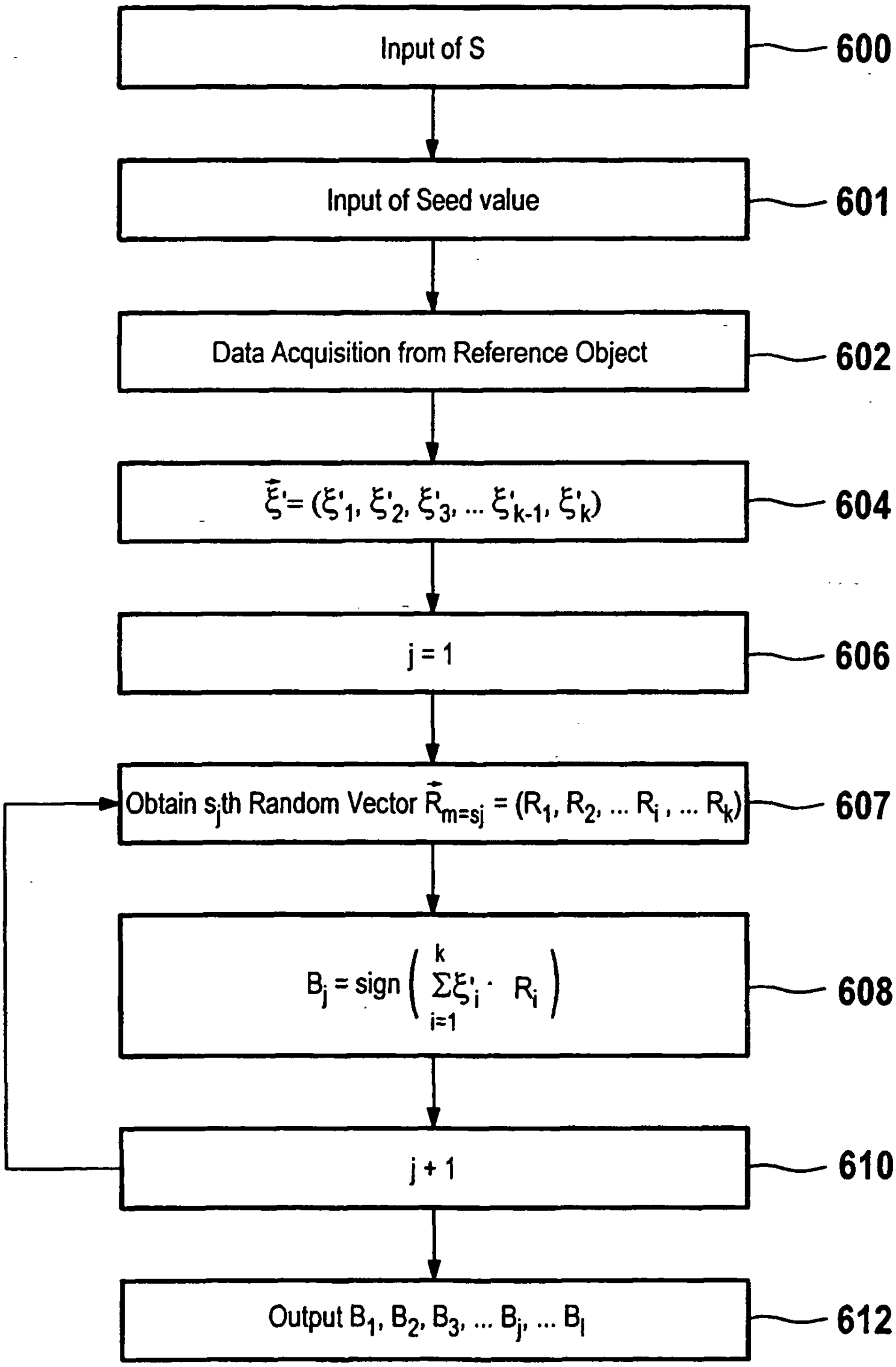
Input of S
600
Input of Seed value
601
Data Acquisition from Reference Object
602
$\vec{\xi}' = (\xi'_1, \xi'_2, \xi'_3, \ldots \xi'_{k-1}, \xi'_k)$
604
j = 1
606
Obtain $s_j$th Random Vector $\vec{R}_{m=sj} = (R_1, R_2, \ldots R_i, \ldots R_k)$
607
$B_j = \text{sign}\left(\sum_{i=1}^{k} \xi'_i \cdot R_i\right)$
608
j + 1
610
Output $B_1, B_2, B_3, \ldots B_j, \ldots B_l$
612

Fig. 6

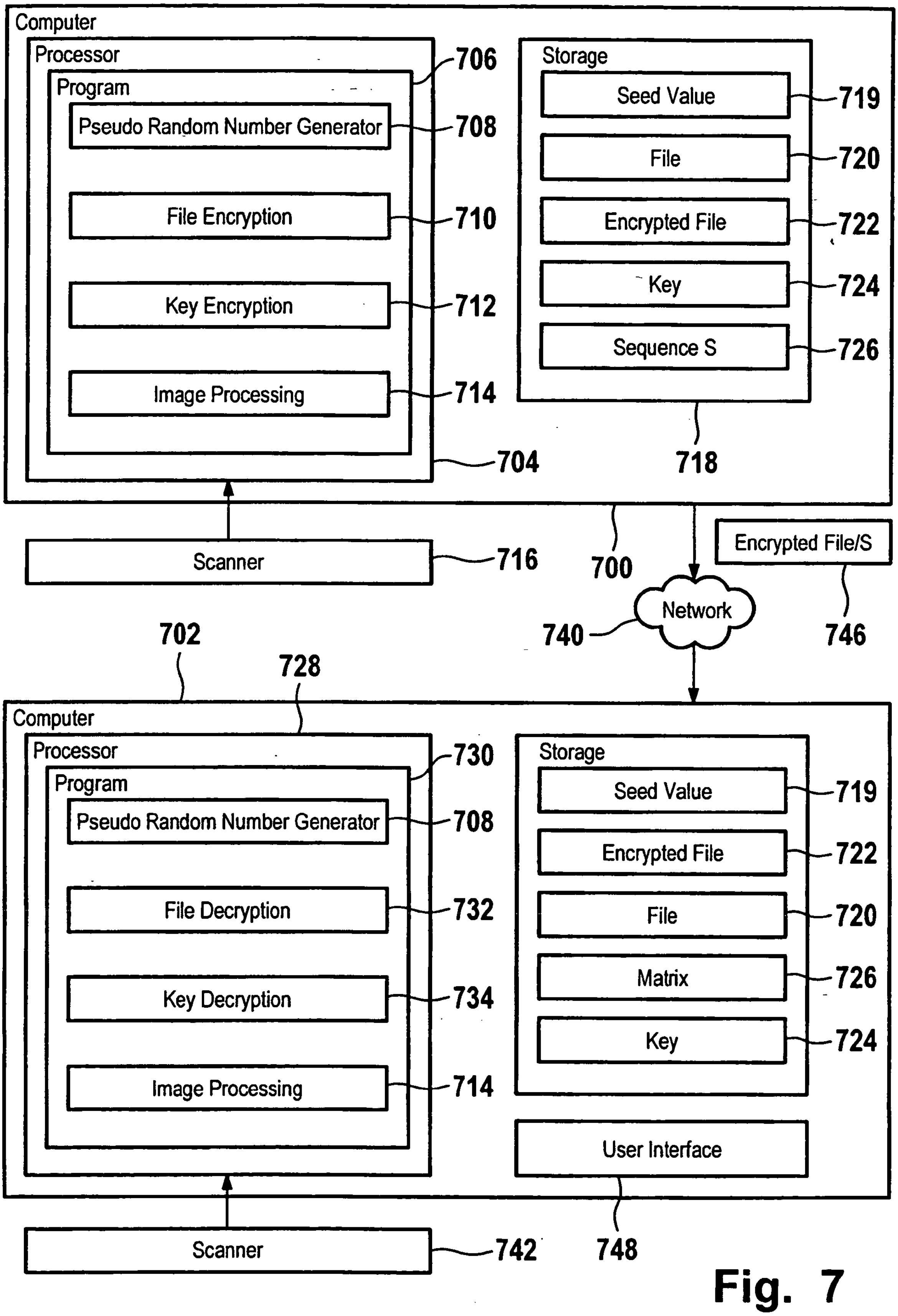
Computer
Processor
Program
Pseudo Random Number Generator
File Encryption
Key Encryption
Image Processing
706
708
710
712
714
704
Storage
Seed Value
File
Encrypted File
Key
Sequence S
719
720
722
724
726
718
Scanner
716
700
Encrypted File/S
746
Network
740
702
728
Computer
Processor
Program
Pseudo Random Number Generator
File Decryption
Key Decryption
Image Processing
730
708
732
734
714
Storage
Seed Value
Encrypted File
File
Matrix
Key
719
722
720
726
724
User Interface
748
Scanner
742

Fig. 7

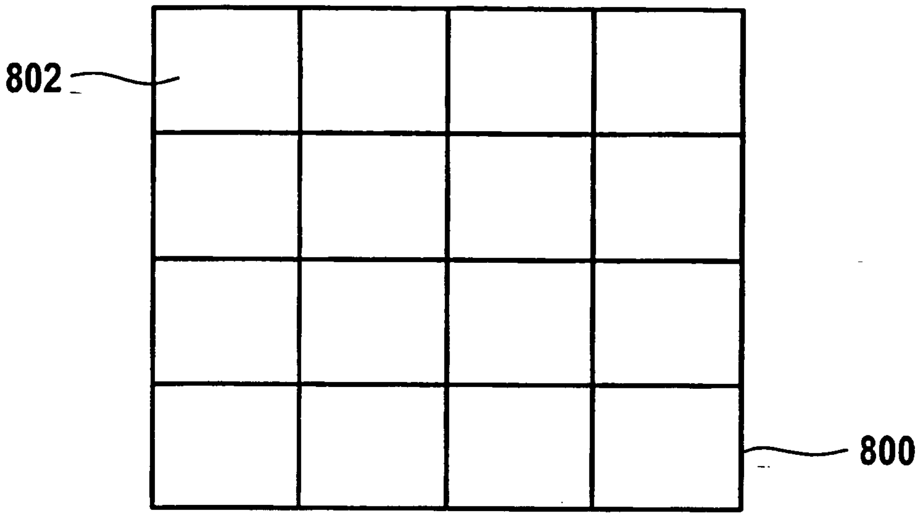


Fig. 8

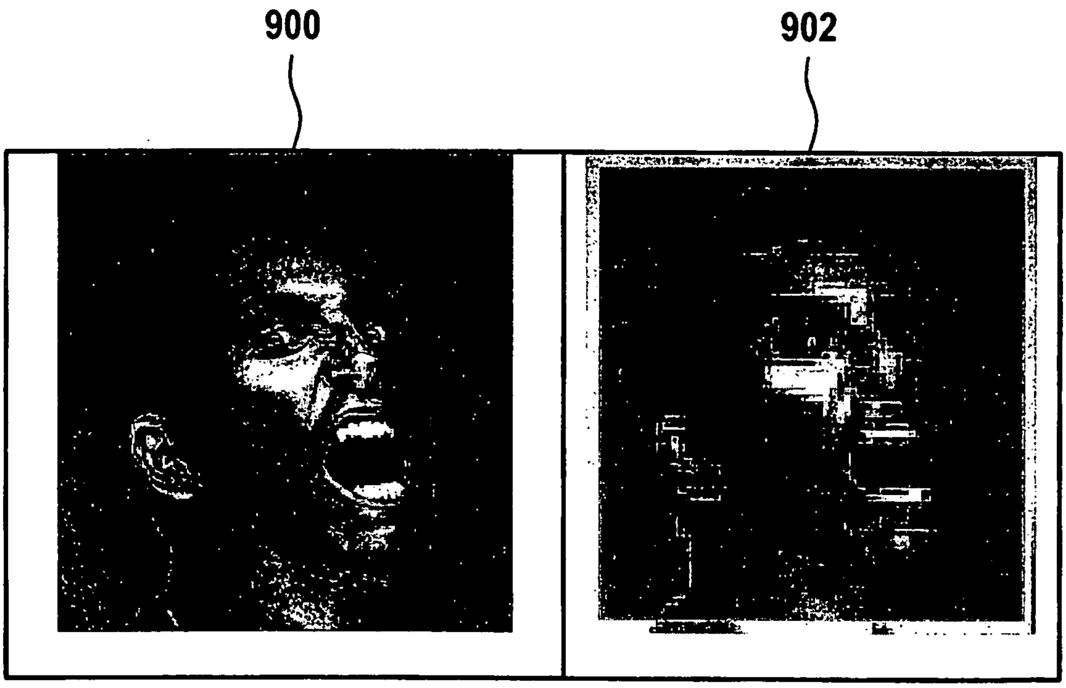


Fig. 9

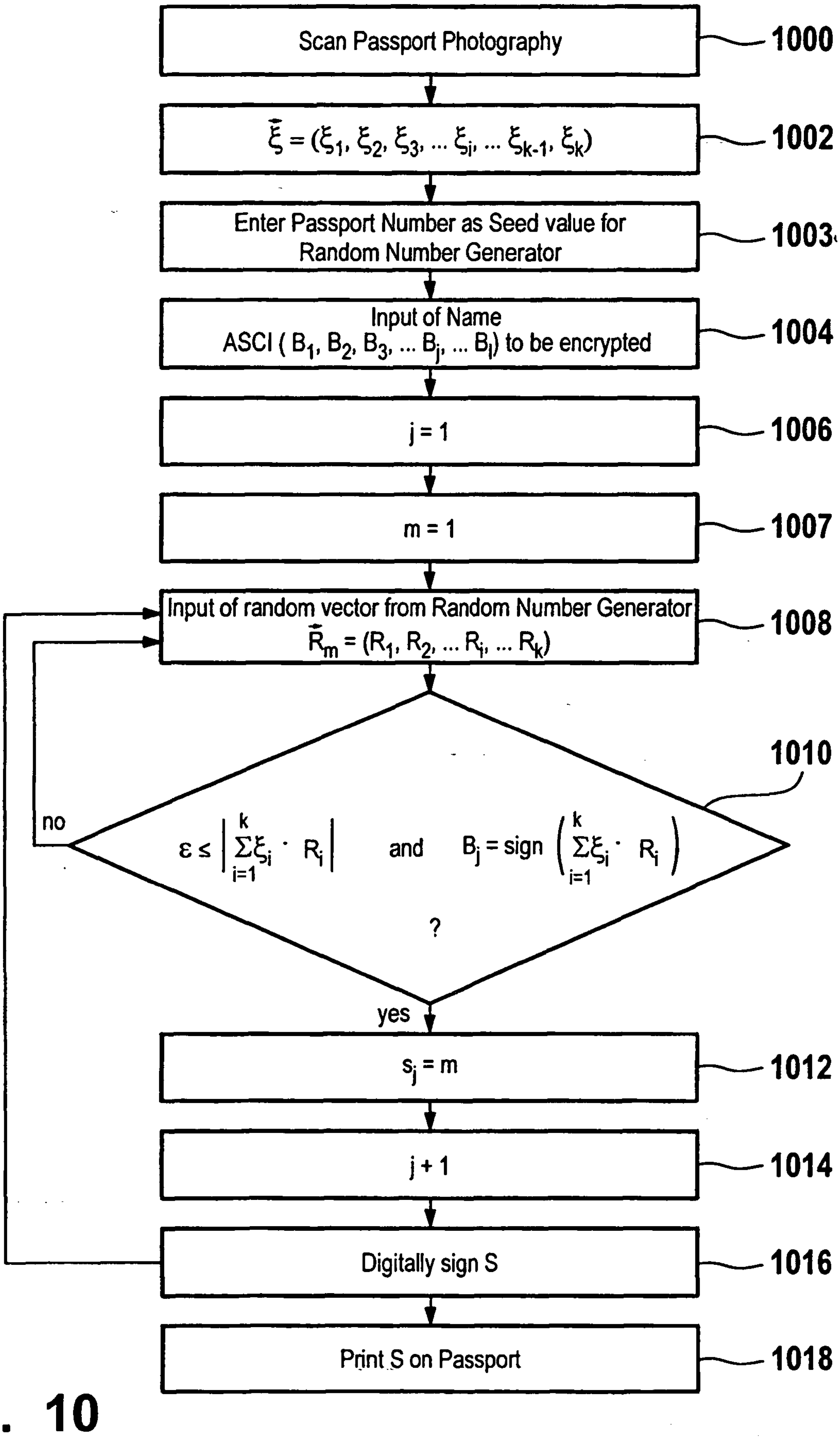
Scan Passport Photography
1000
$\vec{\xi} = (\xi_1, \xi_2, \xi_3, \ldots \xi_i, \ldots \xi_{k-1}, \xi_k)$
1002
Enter Passport Number as Seed value for Random Number Generator
1003
Input of Name
ASCI ( $B_1, B_2, B_3, \ldots B_j, \ldots B_l$) to be encrypted
1004
j = 1
1006
m = 1
1007
Input of random vector from Random Number Generator
$\vec{R}_m = (R_1, R_2, \ldots R_i, \ldots R_k)$
1008
1010
no
$\varepsilon \leq \left| \sum_{i=1}^{k} \xi_i \cdot R_i \right|$ and $B_j = \text{sign} \left( \sum_{i=1}^{k} \xi_i \cdot R_i \right)$
?
yes
$s_j = m$
1012
j + 1
1014
Digitally sign S
1016
Print S on Passport
1018

Fig. 10

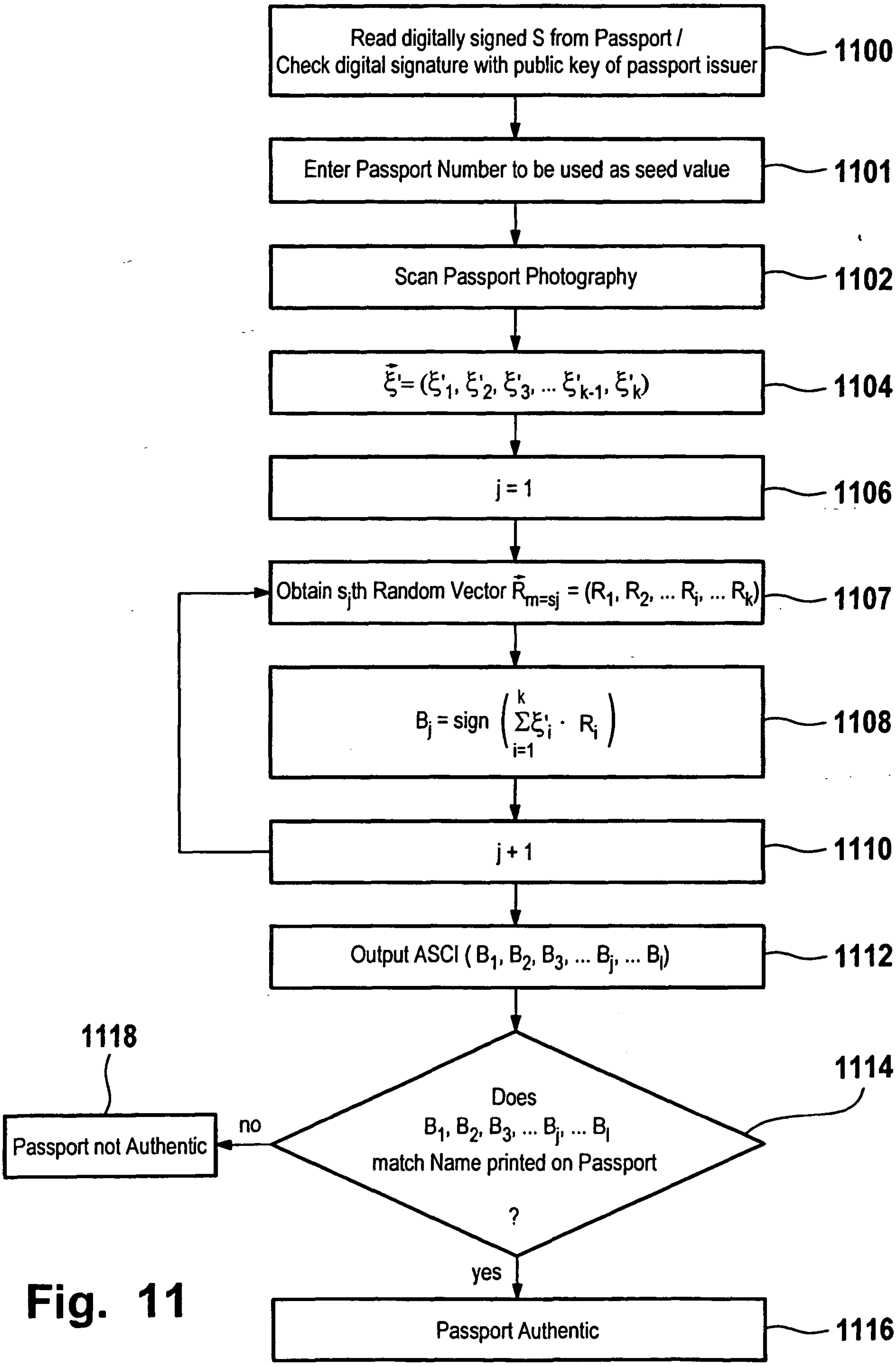
Read digitally signed S from Passport / Check digital signature with public key of passport issuer
1100
Enter Passport Number to be used as seed value
1101
Scan Passport Photography
1102
$\vec{\xi}' = (\xi'_1, \xi'_2, \xi'_3, \ldots \xi'_{k-1}, \xi'_k)$
1104
j = 1
1106
Obtain $s_j$th Random Vector $\vec{R}_{m=sj} = (R_1, R_2, \ldots R_i, \ldots R_k)$
1107
$B_j = \text{sign}\left(\sum_{i=1}^{k} \xi'_i \cdot R_i\right)$
1108
j + 1
1110
Output ASCI ( $B_1, B_2, B_3, \ldots B_j, \ldots B_l$)
1112
1118
1114
Does $B_1, B_2, B_3, \ldots B_j, \ldots B_l$ match Name printed on Passport ?
no
Passport not Authentic
yes
Passport Authentic
1116

Fig. 11

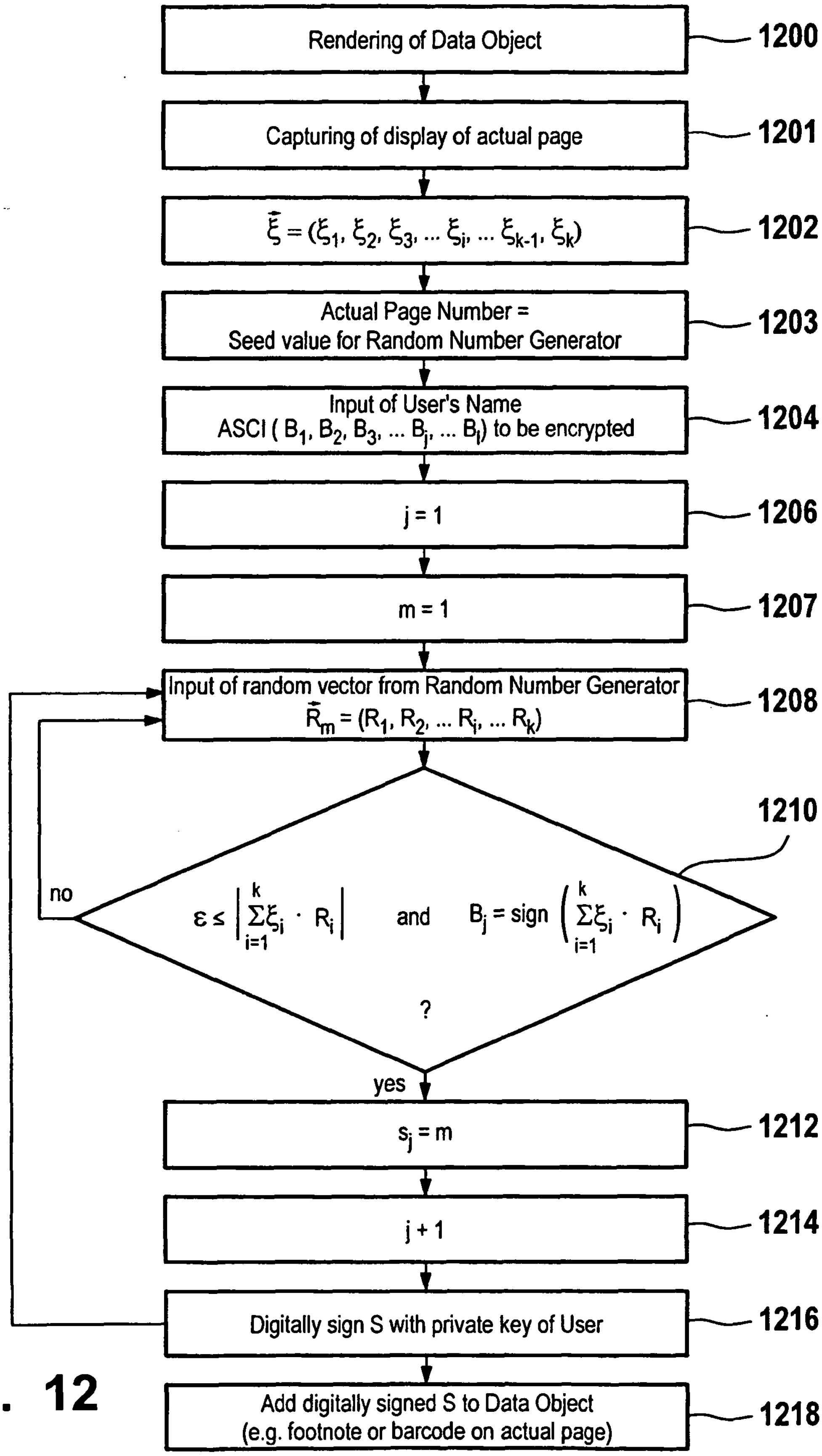
Rendering of Data Object
1200
Capturing of display of actual page
1201
ξ = (ξ1, ξ2, ξ3, ... ξi, ... ξk-1, ξk)
1202
Actual Page Number =
Seed value for Random Number Generator
1203
Input of User's Name
ASCI ( B1, B2, B3, ... Bj, ... Bl) to be encrypted
1204
j = 1
1206
m = 1
1207
Input of random vector from Random Number Generator
Rm = (R1, R2, ... Ri, ... Rk)
1208
1210
no
ε ≤ |Σξi · Ri| and Bj = sign (Σξi · Ri) ?
yes
sj = m
1212
j + 1
1214
Digitally sign S with private key of User
1216
Add digitally signed S to Data Object
(e.g. footnote or barcode on actual page)
1218

Fig. 12

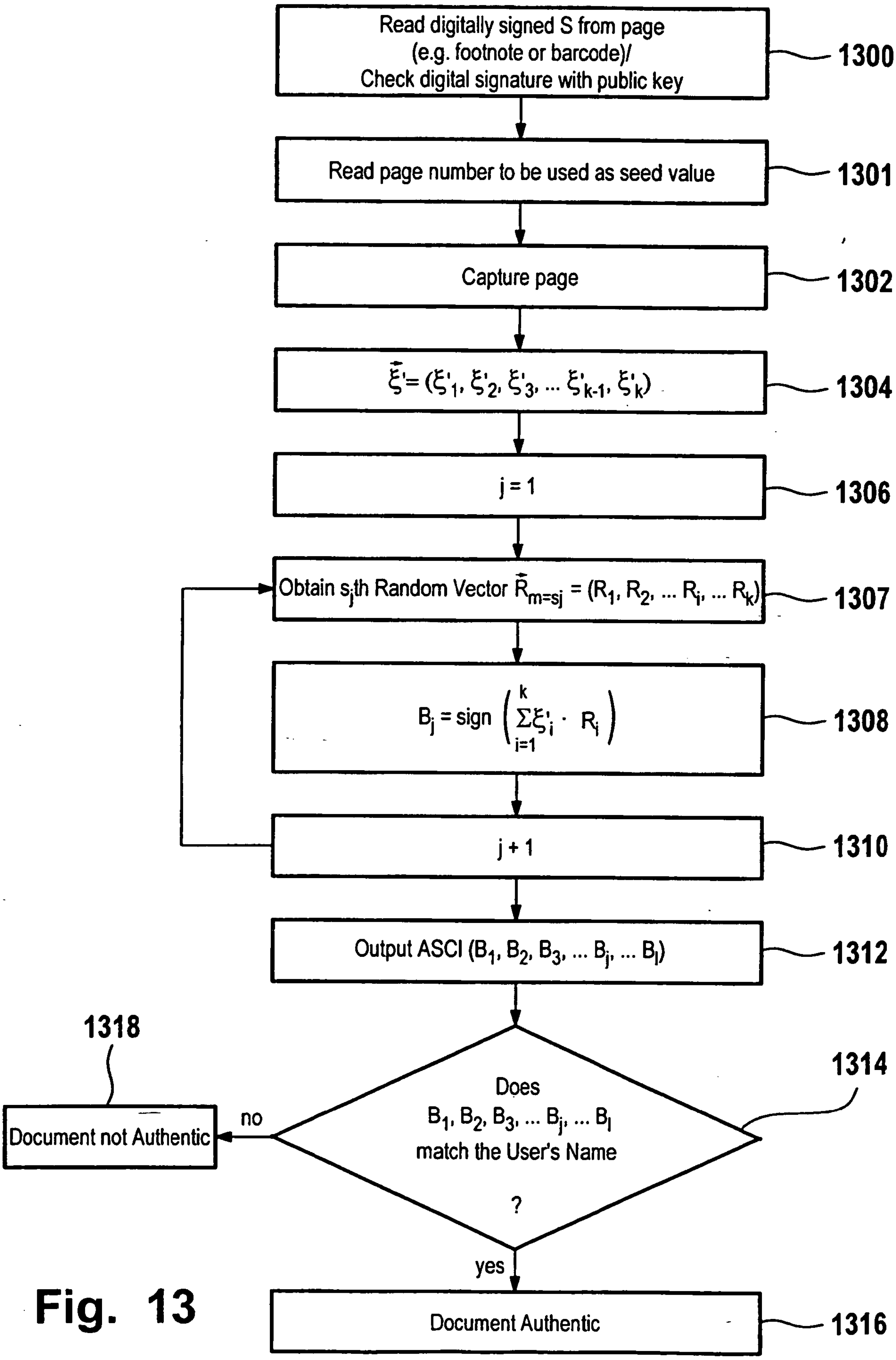

Read digitally signed S from page (e.g. footnote or barcode)/ Check digital signature with public key
1300
Read page number to be used as seed value
1301
Capture page
1302
$\vec{\xi}' = (\xi'_1, \xi'_2, \xi'_3, \dots \xi'_{k-1}, \xi'_k)$
1304
j = 1
1306
Obtain $s_j$th Random Vector $\vec{R}_{m=sj} = (R_1, R_2, \dots R_i, \dots R_k)$
1307
$B_j = \text{sign}\left(\sum_{i=1}^{k} \xi'_i \cdot R_i\right)$
1308
j + 1
1310
Output ASCI $(B_1, B_2, B_3, \dots B_j, \dots B_l)$
1312
Does $B_1, B_2, B_3, \dots B_j, \dots B_l$ match the User's Name ?
1314
no
Document not Authentic
1318
yes
Document Authentic
1316


Fig. 13

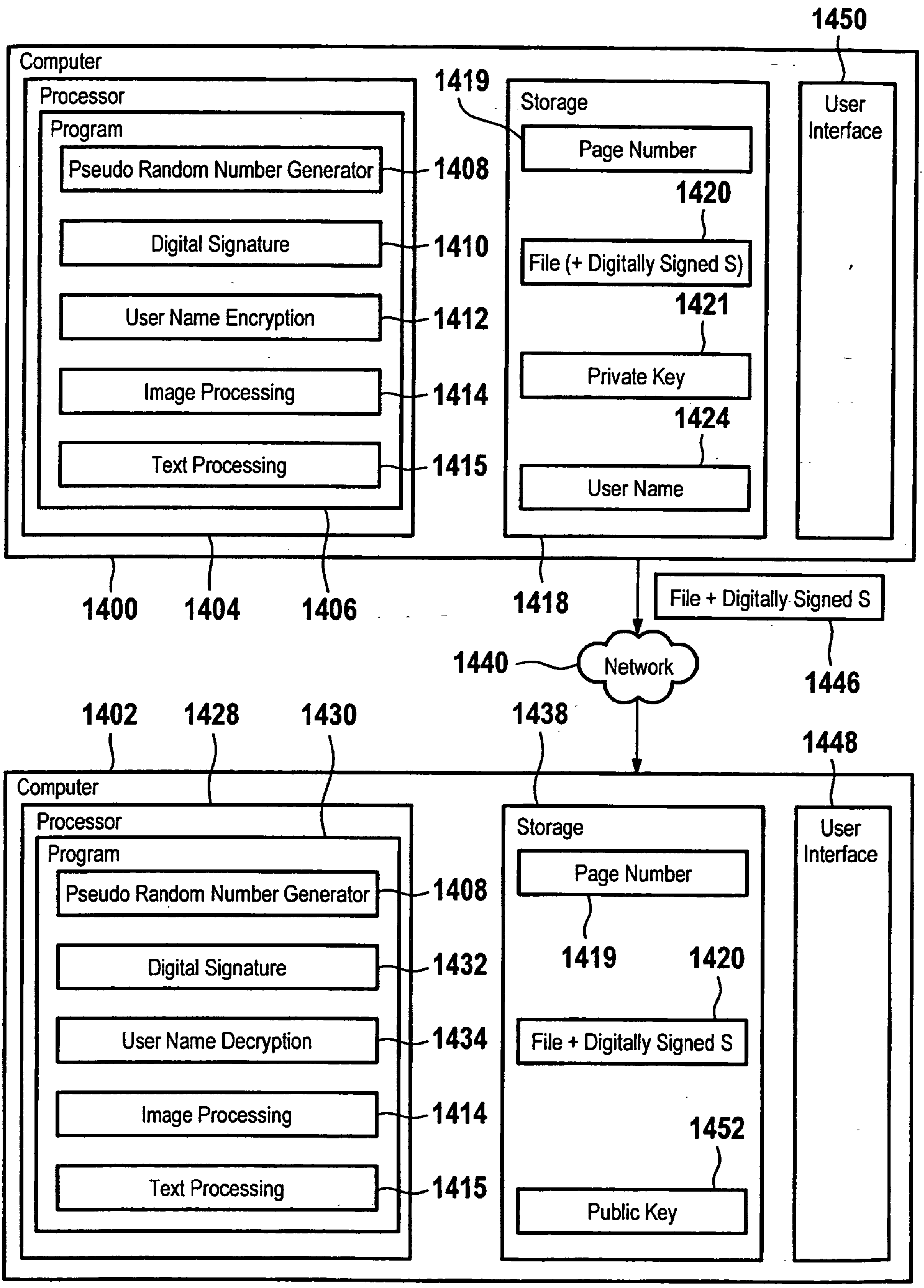
1450
Computer
Processor
Program
Pseudo Random Number Generator
1408
Digital Signature
1410
User Name Encryption
1412
Image Processing
1414
Text Processing
1415
1419
Storage
Page Number
1420
File (+ Digitally Signed S)
1421
Private Key
1424
User Name
User Interface
1400
1404
1406
1418
File + Digitally Signed S
1446
1440
Network
1402
1428
1430
1438
1448
Computer
Processor
Program
Pseudo Random Number Generator
1408
Digital Signature
1432
User Name Decryption
1434
Image Processing
1414
Text Processing
1415
Storage
Page Number
1419
1420
File + Digitally Signed S
1452
Public Key
User Interface

Fig. 14